# EUROPÄISCHE PATENTSCHRIFT

(11) **EP 1 495 920 B1**
(45) Veröffentlichungstag und Bekanntmachung des Hinweises auf die Patenterteilung: **03.05.2006**
(21) Anmeldenummer: 04010517.3
(22) Anmeldetag: 04.05.2004
(51) Int. Cl.: B60R 21/13

(54) **Überrollbügelanordnung für ein Kraftfahrzeug**
Roll-over bar device
Dispositif d'arceau de sécurité

(30) Priorität: 05.07.2003 DE 10330508
(43) Veröffentlichungstag der Anmeldung: 12.01.2005
(73) Patentinhaber: Dr.Ing. h.c.F. Porsche Aktiengesellschaft, 70435 Stuttgart (DE)
(72) Erfinder: Pfertner, Kurt, 71254 Ditzingen (DE); Ranft, Detlev, 76275 Ettlingen (DE); Hermann, Felix, 71229 Leonberg (DE)

(56) Entgegenhaltungen:
- DE-A- 19 546 425
- DE-C- 4 412 108
- FR-A- 2 040 866
- GB-A- 272 848

## Beschreibung

Bei der Erfindung wird ausgegangen von einer Überrollbügelanordnung für ein Kraftfahrzeug.

Aus der nächstkommenden DE 44 12 108 C1 ist eine Überrollbügelanordnung bekannt, die beispielsweise eine Schweißmutter als Befestigungsmittel für einen Gurtumlenkbeschlag aufweist. Die Überrollbügelanordnung ist aus mehreren Hohlprofilabschnitten zusammengesetzt, wobei die zweiteilige Querstrebe in einem mittleren Verbindungsbereich dadurch festigkeitsverstärkt ist, dass mehrere der Hohlprofilabschnitte ineinanderliegenden.

Eine andere Überrollbügelanordnung kann der DE 77 02 086 U1 entnommen werden. Hier sind mehrere Hohlprofilabschnitte aneinandergesetzt. Beispielsweise in einem Eckbereich ist einer der Hohlprofilabschnitte mit einem Einlegeteil als Verstärkung versehen. Nachteilig bei einem derartigen Einlegeteil ist, dass dessen richtige Positionierung innerhalb des Hohlprofilabschnitts vor dem Biegen schwierig ist und außerdem bis unmittelbar vor dem Biegen ein Verrutschen des Einlegeteils ohne Gegenmaßnahmen nicht vollständig ausgeschlossen werden kann.

Aus der DE-Gbm 69 14 537 ist eine Überrollbügelanordnung ersichtlich, bei der Hohlprofilabschnitte mit Abschnitten aus Vollmaterial verbunden sind, was jedoch zu einem relativ hohen Gesamtgewicht führt.

Ferner befasst sich die DE 94 16 772 U1 mit einer Überrollbügelanordnung, bei der auf eine Querstrebe Rohrabschnitte mit U-förmig gebogenen Überrollbügeln aufgeschoben sind. Durch den größeren Außendurchmesser der Überrollbügel ergibt sich ein Absatz auf der Mantelfläche der Querstrebe.

Aus der DE-A-195 46 425 ist eine Überrollschutzstruktur für einen Maschinenrahmen bekannt, mit mehreren aneinandergesetzten Hohlprofilabschnitten, von denen zumindest ein Hohlprofilabschnitt verstärkt ist, wobei der wenigstens eine Hohlprofilabschnitt aus zumindest zwei aneinandergereihten und unlösbar miteinander verbundenen Hohlprofilelementen mit unterschiedlicher Wandstärke zusammengesetzt ist und wobei das Hohlprofilelement mit der größeren Wandstärke einstückig als komplexes Gusssteil ausgeführt ist und in einem Verbindungsbereich zwischen zwei aneinandergesetzten Hohlprofilabschnitten angeordnet ist.

In der Zeitschrift ATZ Nr. 10/2002, Jahrgang 104, Seiten 928 bis 933 sind aneinandergesetzte Hohlprofilabschnitte beschriehen, die - in Richtung ihrer Längsachse gesehen - einen Dickensprung, also eine unterschiedliche Wandstärke aufweisen. Als Anwendungsbereich für diese auch als Tailored Tubes bezeichneten Hohlprofile sind Tragrahmen für Kraftfahrzeugkarosserien genannt.

Es ist Aufgabe der Erfindung, eine Überrollbügelanordnung für ein Kraftfahrzeug anzugeben, die in festigkeitsrelevanten Bereichen ohne ineinandergeschachtelte Hohlprofilabschnitte und ohne Einlegeteile auskommt und dennoch hinsichtlich ihres Gewichts und ihrer Steifigkeit optimiert ist.

Gelöst wird diese Aufgabe mit einer Überrollbügelanordnung für ein Kraftfahrzeug, die die in Anspruch 1 genannten Merkmale umfasst. Weitere, die Erfindung ausgestaltende Merkmale sind den Unteransprüchen zu entnehmen.

Die mit der Erfindung hauptsächlich erzielten Vorteile sind darin zu sehen, dass in relevanten Bereichen der Überrollbügelanordnung durch das erfindungsgemäß einstückige und mit der größeren Wandstärke versehene Hohlprofilelement der erste Verbindungsbereich zwischen zwei Hohlprofilabschnitten verstärkt ist und somit eine höhere Festigkeit erzielt wird. Außerdem kann zusätzlich oder alternativ in einem zweiten Verbindungsbereich zwischen einem Hohlprofilabschnitt und einem Befestigungselement eine erhöhte Festigkeit durch das erfindungsgemäße Hohlprofilelement bereit gestellt werden, um eine sichere Befestigung für ein Anbauteil zu erreichen. Für die Hohlprofilabschnitte mit geringeren Festigkeitsanforderungen können ggf. in ihrer Wandstärke weiter reduzierte Hohlprofilelemente eingesetzt werden, so dass sich hieraus eine Gewichtsoptimierung ergibt.

Gemäß einer Weiterbildung mit den in Anspruch 2 genannten Merkmalen ist vorteilhaft, dass im Fall eines Fahrzeugüberschlags sich der U-förmig gebogene Überrollbügel auf dem erfindungsgemäß verstärkten Verbindungsbereich an der Querstrebe abstützen kann.

Vorteilhaft ist bei einem Ausführungsbeispiel entsprechend Anspruch 6, dass sich das äußere Erscheinungsbild der Überrollbügelanordnung gegenüber einer Überrollbügelanordnung aus dem Stand der Technik unverändert darstellt, also an der Mantelfläche der Hohlprofilabschnitte kein Dickensprung zu sehen ist.

Die Erfindung wird nachfolgend anhand von Ausführungsbeispielen mit Bezug auf die Zeichnung näher erläutert.

Es zeigen:
- Fig. 1: eine perspektivische Ansicht einer Überrollbügelanordnung und
- Fig. 2: einen Schnitt entlang der Linie II-II in Fig. 1.

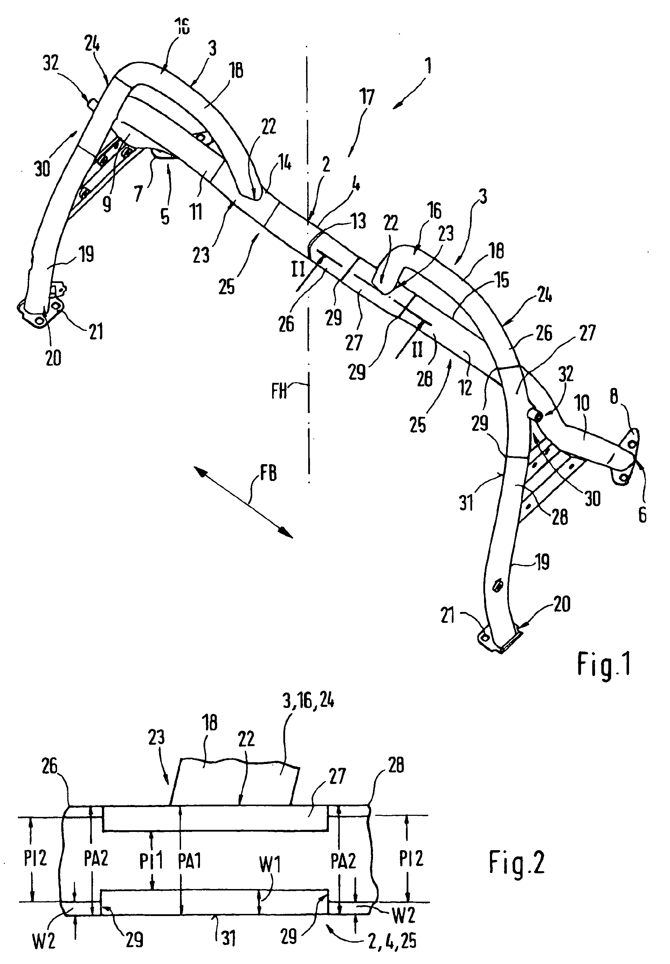

Fig. 1 zeigt eine Überrollbügelanordnung 1, die grundsätzlich aus zwei miteinander verbundenen Rahmenteilen 2 und 3 zusammengesetzt ist. Der erste Rahmenteil 2 umfasst eine Querstrebe 4, die mit dem Aufbau eines hier nicht dargestellten Kraftfahrzeugs verbindbar ist. Hierfür sind an freien Enden 5 und 6 des Rahmenteils 2 bzw. der Querstrebe 4 erste Befestigungskonsolen 7 und 8 angebracht. Insbesondere ist vorgesehen, dass von der Querstrebe 4 nach unten gerichtete, aufrechte Längsschenkel 9 und 10 ausgehen, die die freien Enden 5 und 6 mit den Befestigungskonsolen 7 und 8 aufweisen. Die Querstrebe 4 kann einteilig oder - wie in Fig. 1 zu sehen - mehrteilig, insbesondere zweiteilig, aufgebaut sein, wobei die beiden Teile 11 und 12 bei Bezugszeichen 13 miteinander verbunden sind. Jedes der Teile 11 und 12 ist vorzugsweise L - förmig gebogen, so dass die jeweiligen Längsschenkel 9 und 10 mit dem jeweils zugeordneten Querschenkel 14 bzw. 15 die L - Form bilden und die Querschenkel 14 und 15 die Querstrebe 4 darstellen. Die Querstrebe kann sich in Richtung FR über die Fahrzeugbreite erstrecken.

Der zweite Rahmenteil 3 bildet einen U - förmigen Überrollbügel 16, der auf dem ersten Rahmenteil 2 abgestützt ist und diesen, insbesondere die Querstrebe 4, in Fahrzeughochrichtung FH nach oben überragt. Der Überrollbügel 16 kann sich über die Querstrebe 4 in Richtung FB erstrecken oder - wie im Ausführungsbeispiel gezeigt - können zwei separate Rahmenteile 3 jeweils als U - förmig gebogener Überrollbügel 16 an dem Rahmenteil 2 vorgesehen sein. Jeder Überrollbügel 16 erstreckt sich dabei lediglich über einen Teilabschnitt - in Richtung FB der Fahrzeugbreite gesehen - der Querstrebe 4, vorzugsweise so, dass zwischen den beiden Überrollbügel 16 einen freier Mittenbereich 17 vorliegt.

Der Überrollbügel 16 ist einerseits auf der Querstrebe 4 abgestützt und andererseits mit dem Aufbau des Kraftfahrzeugs verbunden. Dafür besitzt der Überrollbügel 16 neben seinem U - förmigen Bogenabschnitt 18 noch einem von dem Bogenabschnitt 18 ggf. einstückig ausgehenden, nach unten weisenden, aufrechten Fortsatz 19, so dass das Rahmenteil 3 an seinem freien Ende 20 des Fortsatzes 19 über eine zweite Befestigungskonsole 21 mit dem Aufbau des Kraftfahrzeugs verbindbar ist. Das andere Ende 22 des zweiten Rahmenteils 3 ist auf dem ersten Rahmenteil 2 abgestützt und insbesondere unlösbar in einem ersten Verbindungsbereich 23 mit der Querstrebe 4 verbunden.

Jedes der Rahmenteile 2 und 3 ist aus einem Hohlprofilabschnitt 24 bzw. 25 hergestellt. Die Hohlprofilabschnitte 24 und 25 sind aus einem Rohr oder aus tiefgezogenen und zusammengefügten Blechschalen aufgebaut. Somit ist die Überrollbügelanordnung 1 aus wenigstens zwei aneinandergesetzten Hohlprofilabschnitten 24 und 25 gefügt. Jedes der Rahmenteile 2 und 3 kann aus einem oder mehreren Hohlprofilabschnitten bestehen.

Wenigstens einer der Hohlprofilabschnitte 24 bzw. 25 ist aus zumindest zwei, vorzugsweise mehreren Hohlprofilelementen 26, 27, 28 zusammengefügt, insbesondere in dem Verbindungsbereich 23 ist gemäß Fig. 2 der Hohlprofilabschnitt 25 aus den mehreren Hohlprofilelementen 26, 27, 28 mit unterschiedlicher Wandstärke W1 bzw. W2 zusammengesetzt, wobei das zwischen den Hohlprofilelementen 26 und 28 liegende einstückige Hohlprofilelement 27 gegenüber den anderen Hohlprofilelementen 26 bzw. 28 die größere Wandstärke W1 aufweist und die Hohlprofilelemente 26 und 28 mit der geringeren Wandstärke W2 ausgebildet sind. Die aneinandergereihten Hohlprofilelemente 26, 27, 28 sind in ihrem jeweiligen, vorzugsweise stumpfen, Fügebereich 29 unlösbar, beispielsweise durch Schweißen, miteinander zum Hohlprofilabschnitt 25 verbunden und bilden somit einen Abschnitt der Querstrebe 4, beispielsweise deren Querschenkel 14 bzw. 15. Fig. 2 zeigt ferner, dass der Überrollbügel 16 mit seinem freien Ende 22 mit dem Hohlprofilelement 27 mit der vergrößerten Wandstärke W1 fest verbunden ist und dass der äußere Profilquerschnitt PA1 bzw. PA2 benachbart zum jeweiligen Fügebereich 29 der Hohlprofilelemente 26 und 27 sowie 27 und 28 identisch ist, so dass dort die äußere Mantelfläche 31 des Hohlprofilabschnitts 26 ohne merklichen Übergang ausgeführt ist. Um die größere Wandstärke W1 beim Hohlprofilelement 27 bei unbeeinträchtigter Mantelfläche 31 zu erreichen, ist somit der innere Profilquerschnitt PI1 des Hohlprofilelements 27 gegenüber den inneren Profilquerschnitten PI2 der anderen Hohlprofilelemente 26 und 28 geringer ausgeführt.

Ein zweiter Verbindungsbereich 30 ist in analoger Weise wie im Zusammenhang mit dem Verbindungsbereich 23 zu Fig. 2 beschrieben ausgeführt und aus wenigstens zwei der Hohlprofilelemente 26, 27 und 28 zusammengesetzt, wobei an Stelle des Endes 22 des Überrollbügels 16 in dem zweiten Verbindungsbereich 30 ein Befestigungselement 32 an dem mit der größeren Wandstärke W1 versehenen Hohlprofilelement 27 an der Mantelfläche 31 befestigt ist. Das Befestigungselement 32 dient der Anbindung eines Anbauteils an die Überrollbügelanordnung 1 und ist insbesondere zur Befestigung eines hier nicht gezeigten Gurtumlenkbeschlages vorgesehen. Mithin ist der zweite Rahmenteil 3, insbesondere der U-förmige Überrollbügel 16, mit dem zweiten Verbindungsbereich 30 ausgestattet, an dem das Befestigungselement 32 vorgesehen ist. Alternativ oder zusätzlich könnte der zweite Verbindungsbereich 30 am ersten Rahmenteil 2, beispielsweise an dem Längsschenkel 9 bzw. 10 vorgesehen werden, um weitere Anbauteile, ggf. weitere Sicherheitsgurtteile an der Überrollbügelanordnung 1 zu befestigen. Aus der DE 44 12 109 C2 ist beispielsweise eine Überrollbügelanordnung bekannt, an der ein bewegbares Verdeck angelenkt ist. Somit könnte ein erfindungsgemäß verstärkter Verbindungsbereich 23 bzw. 30 die Befestigungsmittel für ein Verdecklager tragen. Es zeigt sich also, das die auch als Tailored Tubes bezeichneten Hohlprofilabschnitte 24, 25 mit dem Hohlprofilelement 27 mit der Wandstärke W1 und wenigstens einem der Hohlprofilelemente 26 und 28 mit der Wandstärke W2 in einer Vielzahl von festigkeitsrelevanten Verbindungsbereichen 23, 30 an der Überrollbügelanordnung 1 eingesetzt werden können.

## Patentansprüche

1. Überrollbügelanordnung für ein Kraftfahrzeug, mit mehreren aneinandergesetzten Hohlprofilabschnitten, die aus einem Rohr oder aus tiefgezogenen und Zusammengefügten Blechschalen aufgebaut sind, von denen zumindest ein Hohlprofilabschnitt (24, 25) verstärkt ist und aus zumindest zwei aneinandergereihten und unlösbar miteinander verbundenen Hohlprofilelementen (26, 27, 28) mit unterschiedlicher Wandstärke (W1, W2) zusammengesetzt ist, wobei das Hohlprofilelement (27) mit der größeren Wandstärke (W1) einstückig ausgeführt ist und in einem ersten Verbindungsbereich (23) zwischen zwei aneinandergesetzten und gefügten Hohlprofilabschnitten (24, 25) und/oder in einem zweiten Verbindungsbereich (30) zwischen einem der Hohlprofilabschnitte (24, 25) und einem Befestigungselement (32) für ein Anbauteil angeordnet ist.

2. Überrollbügelanordnung nach Anspruch 1, **dadurch gekennzeichnet, dass** einer der Hohlprofilabschnitte (24, 25) eine sich etwa über die Fahrzeugbreite erstreckende Querstrebe (4) und ein anderer der Hohlprofilabschnitte (25, 24) einen U-förmig gebogenen Überrollbügel (16) darstellt, dass der Überrollbügel (16) mit der Querstrebe (4) in dem ersten Verbindungsbereich (23) verbunden ist und dass die Querstrebe (4) in dem ersten Verbindungsbereich (23) mit dem Hohlprofilelement (27) mit der größeren Wandstärke (W1) ausgestattet ist.

3. Überrollbügelanordnung nach Anspruch 2, **dadurch gekennzeichnet, dass** der Überrollbügel (16) mit seinem einen Ende (22) mit der Querstrebe (4) verbunden ist.

4. Uberrollbügelanordnung nach Anspruch 1, **dadurch gekennzeichnet, dass** das Befestigungselement (32) zur Befestigung eines das Anbauteil bildenden Gurtumlenkbeschlags dient.

5. Überrollbügelanordnung nach Anspruch 1, **dadurch gekennzeichnet, dass** der U-förmige Überrollbügel (16) mit dem zweiten Verbindungsbereich (30) ausgestattet ist, an dem das Befestigungselement (32) angeordnet ist.

6. Überrollbügelanordnung nach Anspruch 1, **dadurch gekennzeichnet, dass** der äußere Profilquerschnitt (PA1, PA2) der unterschiedliche Wandstärken (W1, W2) aufweisenden Hohlprofilelemente (26, 27, 28) zumindest im Fügebereich (29), in dem die Hohlprofilelemente (26, 27, 28) unlösbar miteinander verbunden sind, identisch ist, und dass der innere Profilquerschnitt (PI1) des Hohlprofilelements (27) mit der größeren Wandstärke (W1) geringer ist als der innere Profilquerschnitt (PI2) des anderen Hohlprofilelements (26, 28).

## Claims

1. A roll bar arrangement for a motor vehicle, comprising a plurality of adjacent hollow-section portions which are constructed from a pipe or from deep-drawn sheet-metal shells which are joined together, and of which at least one hollow-section portion (24, 25) is strengthened and assembled from at least two hollow-section components (26, 27, 28) of different wall thickness (W1, W2) arranged side by side and non-detachably connected to one another, wherein the hollow-section component (27) with the greater wall thickness (W1) is formed in one piece and is arranged, in a first connecting region (23), between two adjacent and joined hollow-section portions (24, 25) and/or, in a second connecting region (30), between one of the hollow-section portions (24, 25) and a fastening member (32) for an add-on part.

2. A roll bar arrangement according to claim 1, **characterised in that** one of the hollow-section portions (24, 25) forms a cross strut (4) extending substantially over the width of the vehicle and another of the hollow-section portions (25, 24) forms a U-shaped roll bar (16), **in that** the roll bar (16) is connected to the cross strut (4) in the first connecting region (23) and **in that** the cross strut (4) is provided in the first connecting region (23) with the hollow-section component (27) with the greater wall thickness (W1).

3. A roll bar arrangement according to claim 2, **characterised in that** the roll bar (16) is connected at one end (22) to the cross strut (4).

4. A roll bar arrangement according to claim 1, **characterised in that** the fastening member (32) serves to fasten a belt deflection fitting forming the add-on part.

5. A roll bar arrangement according to claim 1, **characterised in that** the U-shaped roll bar (16) is provided with the second connecting region (30) in which the fastening member (32) is arranged.

6. A roll bar arrangement according to claim 1, **characterised in that** the outer cross-section (PA1, PA2) of the hollow-section components (26, 27, 28) having different wall thicknesses (W1, W2) is identical at least in the joint region (29) in which the hollow-section components (26, 27, 28) are non-detachably connected to one another, and **in that** the inner cross-section (PI1) of the hollow-section component (27) with the greater wall thickness (W1) is smaller than the inner cross-section (PI2) of the other hollow-section component (26, 28).

## Revendications

1. Dispositif d'arceau de sécurité pour un véhicule automobile, comprenant plusieurs parties de profilé creux placées les unes contre les autres, qui sont construites à partir d'un tube ou de coques de tôle embouties profond et assemblée, dont au moins une partie de profilé creux (24, 25) est renforcée et est assemblée à partir d'au moins deux éléments de profilé creux (26, 27, 28) alignés entre eux et reliés entre eux de façon indétachable avec une épaisseur de paroi (W1, W2) différente, l'élément de profilé creux (27) avec l'épaisseur de paroi (W1) plus grande étant réalisé d'une seule pièce et étant disposé dans une première zone de liaison (23) entre deux parties de profilé creux (24, 25) placées l'une contre l'autre et assemblées et/ou étant disposé dans une seconde zone de liaison (30) entre l'une des parties de profilé creux (24, 25) et un élément de fixation (32) pour une partie rapportée.

2. Dispositif d'arceau de sécurité selon la revendication 1, **caractérisé en ce que** l'une des parties de profilé creux (24, 25) représente une traverse (4) s'étendant à peu près sur la largeur du véhicule et une autre des parties de profilé creux (24, 25) présente un arceau de sécurité (16) cintré en U, **en ce que** l'arceau de sécurité (16) est relié à la traverse (4) dans la première zone de liaison (23) et **en ce que** la traverse (4) est équipée dans la première zone de liaison (23) avec l'élément de profilé creux (27) avec la plus grande épaisseur de paroi (W1).

3. Dispositif d'arceau de sécurité selon la revendication 2, **caractérisé en ce que** l'arceau de sécurité (16) est relié par l'une de ses extrémités (22) à la traverse (4).

4. Dispositif d'arceau de sécurité selon la revendication 1, **caractérisé en ce que** l'élément de fixation (32) sert à la fixation d'une ferrure de renvoi de ceinture formant la partie rapportée.

5. Dispositif d'arceau de sécurité selon la revendication 1, **caractérisé en ce que** l'arceau de sécurité (16) en U est équipé de la seconde zone de liaison (30) sur laquelle est disposé l'élément de fixation (32).

6. Dispositif d'arceau de sécurité selon la revendication 1, **caractérisé en ce que** la section de profilé (PA1, PA2) extérieure des éléments de profilé creux (26, 27, 28) présentant différentes épaisseurs de paroi (W1, W2) est identique au moins dans la zone d'assemblage (29), dans laquelle les éléments de profilé creux (26, 27, 28) sont reliés entre eux de façon indétachable, et **en ce que** la section de profilé (P11) intérieure de l'élément de profilé creux (27) avec la plus grande épaisseur de paroi (W1) est plus faible que la section de profilé (P12) intérieure de l'autre élément de profilé creux (26, 28).
